# EUROPEAN PATENT SPECIFICATION

(11) **EP 2 567 814 B1**
(45) Date of publication and mention of the grant of the patent: **16.08.2017**
(21) Application number: 11774778.2
(22) Date of filing: 07.04.2011
(51) Int. Cl.: B32B 27/36, C08J 7/04, C09D 7/12, C09D 163/00

(54) **LAMINATED POLYESTER FILM**
LAMINIERTER POLYESTERFILM
FILM POLYESTER STRATIFIÉ

(30) Priority: 29.04.2010 JP 2010104633
(43) Date of publication of application: 13.03.2013
(73) Proprietor: Mitsubishi Chemical Corporation, Tokyo (JP)
(72) Inventor: KAWASAKI, Taishi, Maibara-shi Shiga 521-0234 (JP); FUJITA, Masato, Maibara-shi Shiga 521-0234 (JP)
(74) Representative: Ter Meer Steinmeister & Partner
(86) International application number: PCT/JP2011/058796
(87) International publication number: WO 2011/135994

(56) References cited:
- WO-A1-2009/116231
- WO-A1-2009/131104
- JP-A- 2007 130 955
- JP-A- 2008 169 277
- JP-A- 2008 183 882
- JP-A- 2008 209 681
- DATABASE WPI Week 201004 Thomson Scientific, London, GB; AN 2009-S61144 XP002716438, & JP 2009 300658 A (TOYOBO KK) 24 December 2009 (2009-12-24)

## Description

### TECHNICAL FIELD

The present invention relates to a laminated polyester film, and more particularly, to a laminated polyester film which can be suitably used in the applications in which occurrence of interference fringes owing to reflection of external light should be prevented, for example, such as liquid crystal displays, plasma display panels, and organic electroluminescence.

### BACKGROUND ART

In recent years, polyester films have been frequently used as various kinds of optical films and molding films which are employed in various applications such as touch panels, antireflection films, prism sheets, light diffusion sheets and electromagnetic shielding films as members of liquid crystal displays or plasma displays as well as in-mold transfer films and in-mold label films. A base film used for these members has been required to have excellent transparency and visibility.

These films have been often subjected to hard coating treatment in order to enhance an anti-curling property, a mar resistance and a surface hardness thereof. Also, as a base material for the films, there have been generally used polyester films which are excellent in transparency and mechanical properties. In the hard coating treatment, in order to enhance adhesion between a polyester film as the base material and a hard coat layer, a coating layer having an easy-bonding property is generally provided as an intermediate layer therebetween. For this reason, refractive indices of these three layers including the polyester film, the easy-bonding coating layer and the hard coat layer must be taken into consideration to avoid occurrence of interference fringes.

When using the films having interference fringes in displays such as touch panels, the displays tend to exhibit a poor visibility, resulting in difficulty in handling thereof upon use. For this reason, it has been required to take a suitable measure against the interference fringes. In general, it is considered that the refractive index of the coating layer at which occurrence of interference fringes can be reduced is a geometrical mean value of a refractive index of the polyester film as a base material and a refractive index of the hard coat layer. Therefore, it is ideally required to adjust the refractive index of the coating layer near to the geometrical mean value. In this case, since the polyester film has a high refractive index, it has been generally required to design a coating layer having a high refractive index.

As the method of enhancing a refractive index of the coating layer to prevent occurrence of interference fringes, there is known, for example, the method in which a metal chelate compound having a high refractive index is used in combination with a resin and incorporated therewith into the coating layer. However, in this method, owing to unstableness of the metal chelate compound in an aqueous solution, a coating solution used therein also tends to become unstable according to combination between the compound and resin, so that the procedure of replacing the coating solution with new one requires a very prolonged time when carrying out the film production process for a long period of time (Patent Document 1). In addition, an ordinary high-refractive material tends to be deteriorated in adhesion to a surface functional layer such as the hard coat layer. Therefore, it has been required to provide a coating layer which is capable of effectively exhibiting an enhanced adhesion property to the high refractive material even when used in combination therewith.

### Prior Art Documents

### Patent Documents

Patent Document 1: Japanese Patent Application Laid-Open (KOKAI) No. 2005-97571
Polyester films and laminated polyester films are described in WO 2009/116231 A1, JP 2008 169277 A and JP 2008 183882 A. Further, JP 2009 300658 A relates to an easily-adhesive polyester film for laminated polyester film. JP 2007 130955 A relates to a laminated polyester film, which has a coating layer formed on the surface(s) of an antimony-free polyester film.

### SUMMARY OF THE INVENTION

### Problems to be Solved by the Invention

The present invention has been accomplished to solve the above conventional problems. An object of the present invention is to provide a laminated polyester film which is prevented from suffering from occurrence of interference fringes owing to reflection of external light, and exhibits an excellent adhesion property to various surface functional layers such as a hard coat layer.

### Means for Solving Problems

As a result of the present inventors' earnest study in view of the above problems, it has been found that these problems can be readily solved by using a laminated polyester film having a specific structure. The present invention has been attained on the basis of this finding.

That is, in an aspect of the present invention, there is provided a laminated polyester film comprising a polyester film and a coating layer as defined in claim 1.

### Effect of the Invention

In accordance with the present invention, there can be provided a laminated polyester film which can be prevented from suffering from occurrence of interference fringes owing to reflection of external light and is excellent in adhesion to various surface functional layers such as a hard coat layer when the surface functional layers are laminated thereon. Therefore, the present invention has a high industrial value.

### Preferred Embodiments for Carrying Out the Invention

The present invention is described in more detail below.

The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited thereto.

The polyester used in the present invention may be in the form of either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate. On the other hand, as a dicarboxylic acid component of the copolyester, there may be mentioned at least one compound selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned at least one compound selected from the group consisting of ethylene glycol, diethylene glycol, propylene glycol, butanediol, 4-cyclohexanedimethanol and neopentyl glycol.

In addition, the polyester film used in the present invention may also comprise an ultraviolet absorber in order to improve a weather resistance of the film and prevent deterioration of a pigment used in the applications such as a color filter. The ultraviolet absorber is not particularly limited as long as it is a compound having a capability of absorbing an ultraviolet ray and can withstand heat applied during a process for producing the polyester film.

As the ultraviolet absorber, there are generally known an organic ultraviolet absorber and an inorganic ultraviolet absorber. In view of a good transparency, among these ultraviolet absorbers, the organic ultraviolet absorber is preferred. Examples of the organic ultraviolet absorber include, but are not particularly limited to, cyclic iminoester-based ultraviolet absorbers, benzotriazole-based ultraviolet absorbers and benzophenone-based ultraviolet absorbers. Among these organic ultraviolet absorbers, cyclic iminoester-based ultraviolet absorbers and benzotriazole-based ultraviolet absorbers are preferred in view of a good durability. These ultraviolet absorbers may be used in combination of any two or more thereof.

For the purpose of imparting an easy-slipping property to the film and preventing occurrence of flaws in the film during the respective steps, particles may be compounded in the polyester layer in the film of the present invention. The kinds of particles to be compounded in the polyester layer are not particularly limited as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, and titanium oxide. In addition, there may also be used heat-resistant organic particles as described in Japanese Patent Publication (KOKOKU) No. 59-5216, or Japanese Patent Application Laid-Open (KOKAI) No. 59-217755. Examples of the other heat-resistant organic particles include particles of thermosetting urea resins, thermosetting phenol resins, thermosetting epoxy resins, and benzoguanamine resins. Further, there may also be used deposited particles obtained by precipitating and finely dispersing a part of metal compounds such as a catalyst during the process for production of the polyester.

The shape of the particles used in the present invention is also not particularly limited, and may be any of a spherical shape, a massive shape, a bar shape, and a flat shape. Further, the hardness, specific gravity, and color of the particles are also not particularly limited. These particles may be used in combination of any two or more kinds thereof, if required.

The average particle diameter of the particles used in the present invention is usually in the range of 0.01 to 3 µm and preferably 0.01 to 2 µm. When the average particle diameter of the particles is less than 0.01 µm, the particles may fail to impart a sufficient easy-slipping property to the polyester layer, or tend to be aggregated together and therefore exhibit a poor dispersibility, which will cause deterioration in transparency of the resulting film. On the other hand, when the average particle diameter of the particles is more than 3 µm, the surface roughness of the obtained film tends to be too coarse, so that there tend to arise various problems when forming the various surface functional layers thereon in the subsequent steps.

The content of the particles in the polyester layer is usually in the range of 0.0001 to 5% by weight and preferably 0.0003 to 3% by weight. When the content of the particles in the polyester layer is less than 0.0001% by weight, the resulting film tends to be insufficient in easy-slipping property. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester constituting the respective layers of the film. The particles are preferably added to the polyester after completion of an esterification reaction or a transesterification reaction thereof.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder.

Meanwhile, the polyester film used in the present invention may also comprise, in addition to the above particles, known additives such as an antioxidant, an antistatic agent, a thermal stabilizer, a lubricant, a dye, and a pigment, if required.

The thickness of the polyester film used in the present invention is not particularly limited as long as it lies within any suitable range capable of forming a film shape, and is usually in the range of 10 to 300 µm and preferably 25 to 250 µm.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the sheet, it is preferred to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched film is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially stretched film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the laminated polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the film. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

Next, the method of forming the coating layer constituting the laminated polyester film according to the present invention is explained. The coating layer may be formed by either an in-line coating method in which the surface of the polyester film is subjected to coating treatment during the stretching step of the polyester film, an off-line coating method in which the polyester film produced is once transferred to an outside of the film production system and subjected to coating treatment, or combination of these methods. Among these methods, the in-line coating method is preferably used because the coating layer can be formed simultaneously with production of the polyester film and therefore the film can be produced at low costs, and the thicknesses of the coating layer can be varied by controlling a stretch ratio of the polyester film.

For example, in the case of a sequential biaxial stretching, the in-line coating treatment may be carried out, in particular, after completion of the longitudinal stretching but before initiation of the lateral stretching, although not particularly limited thereto. When the coating layer is formed on the polyester film by the in-line coating method, the coating can be carried out simultaneously with formation of the polyester film, and the coating layer can be treated at a high temperature. As a result, it is possible to produce a film suitable as the polyester film used in the present invention.

According to the present invention, it is essentially required that the laminated polyester film comprises a polyester film and a coating layer formed on at least one surface of the polyester film which is produced by applying a coating solution comprising a metal oxide, an oxazoline compound and an epoxy compound thereonto, in which the coating layer has an absolute reflectance whose one minimum value is present in a wavelength range of 400 to 800 nm, and the absolute reflectance at the minimum value is not less than 4.0%.

In the present invention, the metal oxide is used for a main purpose of controlling a refractive index of the coating layer. In particular, since the resin used in the coating layer has a low refractive index, the use of the metal oxide having a high refractive index is preferred, and the use of the metal oxide having a refractive index of not less than 1.7 is more preferred. Specific examples of the metal oxide include zirconium oxide, titanium oxide, tin oxide, yttrium oxide, antimony oxide, indium oxide, zinc oxide, antimony tin oxide and indium tin oxide. These metal oxides may be used alone or in combination of any two or more thereof. Among these metal oxides, preferred are zirconium oxide and titanium oxide, and zirconium oxide is more preferred from the standpoint of a good weather resistance.

The adhesion property of the metal oxide tends to be deteriorated depending upon its use configuration. Therefore, the metal oxide is preferably used in the form of particles. In addition, from the standpoint of a good transparency, the average particle diameter of the metal oxide is preferably not more than 100 nm, more preferably not more than 50 nm, and still more preferably not more than 25 nm.

In the present invention, the oxazoline compound and the epoxy compound serve for enhancing an adhesion property of the coating layer to a surface functional layer formed on the coating layer, such as a hard coat layer. It has been found that the oxazoline compound or the epoxy compound solely is capable of enhancing the adhesion property of the coating layer to the surface functional layer. However, it has been also found that when using the oxazoline compound and the epoxy compound in combination with each other, the adhesion property of the coating layer to the surface functional layer can be further enhanced, in particular, the adhesion property of the coating layer after subjected to a wet heat test can be improved.

The oxazoline compound used in the present invention means a compound comprising an oxazoline group in a molecule thereof. In particular, as the compound comprising an oxazoline group in a molecule thereof, preferred is a polymer comprising an oxazoline group in a molecule thereof. The polymer may be produced by polymerizing an addition-polymerizable monomer solely or polymerizing the addition-polymerizable monomer with other monomers. Examples of the addition-polymerizable monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. These addition-polymerizable monomers may be used alone or in the form of a mixture of any two or more thereof. Among these addition-polymerizable monomers, 2-isopropenyl-2-oxazoline is preferred because of a good industrial availability thereof. The other monomers are not particularly limited as long as they are capable of being copolymerized with the addition-polymerizable monomer. Examples of the other monomers include (meth)acrylic acid esters such as alkyl (meth)acrylates (in which the alkyl group may be methyl, ethyl, n-propyl, isopropyl, n-butyl, isobutyl, t-butyl, 2-ethylhexyl or cyclohexyl); unsaturated carboxylic acids such as acrylic acid, methacrylic acid, itaconic acid, maleic acid, fumaric acid, crotonic acid, styrenesulfonic acid and salts of these acids (such as sodium salts, potassium salts, ammonium salts and tertiary amine salts); unsaturated nitriles such as acrylonitrile and methacrylonitrile; unsaturated amides such as (meth)acrylamide, N-alkyl (meth)acrylamide and N,N-dialkyl (meth)acrylamide (in which the alkyl group may be methyl, ethyl, n-propyl, isopropyl, n-butyl, isobutyl, t-butyl, 2-ethylhexyl or cyclohexyl); vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride and vinyl fluoride; and α,β-unsaturated aromatic monomers such as styrene and α-methyl styrene. These monomers may be used alone or in combination of any two or more thereof.

Examples of the epoxy compound include condensed products of epichlorohydrin with a hydroxyl group of ethylene glycol, polyethylene glycol, glycerol, polyglycerol,or bisphenol A, or an amino group. The condensed product may be in the form of a polyepoxy compound, a diepoxy compound, a monoepoxy compound, and a glycidyl amine compound. Specific examples of the polyepoxy compound include sorbitol polyglycidyl ether, polyglycerol polyglycidyl ether, pentaerythritol polyglycidyl ether, diglycerol polyglycidyl ether, triglycidyl tris(2-hydroxyethyl)isocyanate, glycerol polyglycidyl ether and trimethylol propane polyglycidyl ether. Specific examples of the diepoxy compound include neopentyl glycol diglycidyl ether, 1,6-hexanediol diglycidyl ether, resorcin diglycidyl ether, ethylene glycol diglycidyl ether, polyethylene glycol diglycidyl ether, propylene glycol diglycidyl ether, polypropylene glycol diglycidyl ether and polytetramethylene glycol diglycidyl ether. Specific examples of the monoepoxy compound include allyl glycidyl ether, 2-ethylhexyl glycidyl ether and phenyl glycidyl ether. Specific examples of the glycidyl amine compounds include N,N,N',N'-tetraglycidyl-m-xylylenediamine and 1,3-bis(N,N-diglycidylamino)cyclohexane.

In the laminated polyester film according to the present invention, for the purposes of improving surface properties of the coating layer, reducing occurrence of interference fringes when laminating various surface functional layers such as a hard coat layer on the coating layer, and enhancing a transparency or an adhesion property of the resulting film, there may be used various polymers.

Specific examples of the polymer include polyester resins, acrylic resins, urethane resins, polyvinyl resins (such as polyvinyl alcohol, polyvinyl chloride and vinyl chloride-vinyl acetate copolymers), polyalkylene glycols, polyalkylene imines, methyl cellulose, hydroxy cellulose, and starches. Among these polymers, from the standpoint of enhancing an adhesion property of the coating layer to the surface functional layer such as a hard coat layer, the polyester resins, acrylic resins and urethane resins are preferably used.

Also, in order to facilitate control of a refractive index of the coating layer, a compound having a condensed polycyclic aromatic structure represented by the following formulae may be suitably used in combination with the above-mentioned components in the coating layer. Specific examples of the condensed polycyclic aromatic structure include naphthalene, anthracene, phenanthrene, naphthacene, benz[a]anthracene, benz[a]phenanthrene, pyrene, benz[c]phenanthrene and perylene.

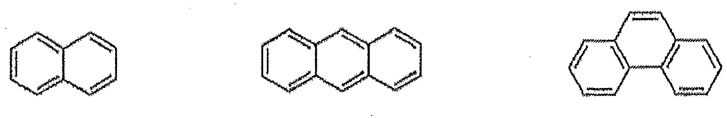

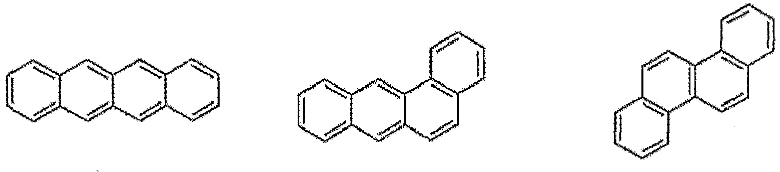

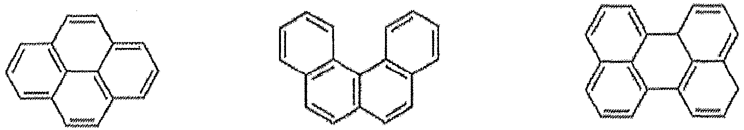

In view of a good coatability on the polyester film, as the compound having a condensed polycyclic aromatic structure, there are preferably used, for example, polymers such as polyester resins, acrylic resins and urethane resins. Among these polymers, especially preferred are polyester resins because they are capable of introducing a large number of the condensed polycyclic aromatic structures thereinto.

As the method of incorporating the condensed polycyclic aromatic structure into the polyester resins, there may be used, for example, the method of introducing two or more hydroxyl groups as substituent groups into the condensed polycyclic aromatic structure to provide a diol component or a polyhydric hydroxyl group component, or the method of introducing two or more carboxyl groups as substituent groups into the condensed polycyclic aromatic structure to provide a dicarboxylic acid component or a polycarboxylic acid component.

From the standpoint of less occurrence of undesirable coloration of the film upon the production process of the laminated polyester film, the compound having the condensed polycyclic aromatic structure included in the coating layer is preferably a compound having a naphthalene skeleton. In addition, from the viewpoints of good adhesion to various surface functional layers to be formed on the coating layer or a good transparency of the resulting film, there are suitably used resins into which the naphthalene skeleton is incorporated as a constituting component of the polyester. Typical examples of the naphthalene skeleton include 1,5-naphthalenedicarboxylic acid, 2,6-naphthalenedicarboxylic acid and 2,7-naphthalenedicarboxylic acid.

Meanwhile, various substituent groups other than the hydroxyl group or carboxyl group, such as a substituent group comprising a sulfur element, an aromatic substituent group such as a phenyl group, and a halogen element group, may be introduced into the condensed polycyclic aromatic structure. In such a case, it can be expected to enhance a refractive index of the resulting film. Further, from the viewpoints of a good coatability and a good adhesion property, a further substituent group such as an alkyl group, an ester group and an amide group may also be introduced into the condensed polycyclic aromatic structure.

Further, the coating layer may also comprise a crosslinking agent other than the above oxazoline compound and epoxy compound unless the subject matter of the present invention is adversely affected thereby. As the crosslinking agent other than the oxazoline compound and epoxy compound, there may be used various known resins. Examples of the crosslinking agent other than the oxazoline compound and epoxy compound include melamine compounds, isocyanate compounds and carbodiimide compounds.

The melamine compounds are compounds having a melamine skeleton therein. Examples of the melamine compounds include alkylolated melamine derivatives, partially or completely etherified compounds obtained by reacting the alkylolated melamine derivative with an alcohol, and a mixture of these compounds. Examples of the alcohol suitably used for the above etherification include methyl alcohol, ethyl alcohol, isopropyl alcohol, n-butanol and isobutanol. The melamine compound may be either a monomer or a di- or higher polymer, or may be in the form of a mixture thereof. In addition, there may also be used those compounds obtained by co-condensing a urea to a part of melamine. Further, a catalyst may also be used to enhance a reactivity of the melamine compound.

The isocyanate compound includes isocyanates and isocyanate derivatives such as typically blocked isocyanates. Examples of the isocyanate compound include aromatic isocyanates such as tolylene diisocyanate, xylylene diisocyanate, methylene diphenyl diisocyanate, phenylene diisocyanate and naphthalene diisocyanate; aromatic ring-containing aliphatic isocyanates such as α,α,α',α'-tetramethyl xylylene diisocyanate; aliphatic isocyanates such as methylene diisocyanate, propylene diisocyanate, lysine diisocyanate, trimethyl hexamethylene diisocyanate and hexamethylene diisocyanate; and alicyclic isocyanates such as cyclohexane diisocyanate, methyl cyclohexane diisocyanate, isophorone diisocyanate, methylene-bis(4-cyclohexyl isocyanate) and isopropylidene dicyclohexyl diisocyanate. Further examples of the isocyanate compound include polymers and derivatives of these isocyanates such as biuret compounds, isocyanurate compounds, uretdione compounds and carbodiimide-modified compounds thereof. These isocyanate compounds may be used alone or in combination of any two or more thereof. In addition, these isocyanate compounds may be used in the form of a single substance, or a mixture or a combined product with various polymers.

In addition, in the present invention, for the purpose of improving an anti-sticking property and a slip property of the coating layer, the coating layer may also comprise particles other than the above metal oxide. The average particle diameter of the particles used in the coating layer is preferably in the range of not more than 1.0 µm, more preferably not more than 0.5 µm and especially preferably not more than 0.2 µm from the standpoint of a good transparency of the resulting film. Specific examples of the particles used in the coating layer include inorganic particles such as silica, alumina, kaolin and calcium carbonate, and organic particles.

Further, the coating layer may also comprise various additives such as a defoaming agent, a coatability improver, a thickening agent, an organic lubricant, an antistatic agent, an ultraviolet absorber, an antioxidant, a foaming agent, a dye and a pigment, if required, unless the subject matter of the present invention is adversely affected thereby.

The content of the metal oxide in the coating solution is in the range of 3 to 70% by weight, preferably 5 to 50% by weight, more preferably 5 to 40% by weight and especially preferably 8 to 30% by weight. When the content of the metal oxide in the coating solution is less than 3% by weight, the refractive index of the coating layer tends to be hardly increased to a sufficient extent, so that it may be difficult to prevent occurrence of interference fringes. When the content of the metal oxide in the coating solution is more than 70% by weight, the obtained coating layer tends to be deteriorated in transparency.

The content of the oxazoline compound in the coating solution is in the range of 1 to 50% by weight, preferably 1 to 30% by weight and more preferably 3 to 20% by weight. When the content of the oxazoline compound in the coating solution is less than 1% by weight, the adhesion between the coating layer and the surface functional layer such as a hard coat layer tends to be deteriorated. When the content of the oxazoline compound in the coating solution is more than 50% by weight, the obtained coating layer tends to have a low refractive index and therefore tends to be deteriorated in visibility owing to interference fringes caused after forming the surface functional layer such as a hard coat layer on the coating layer.

The content of the epoxy compound in the coating solution is in the range of 1 to 50% by weight, preferably 3 to 30% by weight and more preferably 5 to 20% by weight. When the content of the epoxy compound in the coating solution is out of the above-specified range, the adhesion between the coating layer and the surface functional layer such as a hard coat layer tends to be deteriorated, or the resulting film tends to be deteriorated in properties on a coating surface thereof.

The compound having the condensed polycyclic aromatic structure which is used in the coating layer constituting the laminated polyester film of the present invention preferably comprises the condensed polycyclic aromatic structure in an amount of 5 to 80% by weight and more preferably 10 to 60% by weight. The content of the compound having the condensed polycyclic aromatic structure in the coating layer is preferably in the range of not more than 80% by weight, more preferably 5 to 70% by weight and still more preferably 10 to 50% by weight based on a total weight of the coating layer. When the content of the compound having the condensed polycyclic aromatic structure in the coating layer lies within the above-specified range, the resulting coating layer tends to be readily controlled in its refractive index and tends to hardly suffer from occurrence of interference fringes after forming a surface functional layer such as a hard coat layer thereon. Meanwhile, the proportion of the condensed polycyclic aromatic structure in the compound may be determined, for example, by the following method. That is, the respective components of the coating layer are dissolved and extracted in an adequate solvent or warm water, and then fractionated by chromatography. The thus obtained products are subjected to structural analysis by NMR or IR and further analyzed by a pyrolysis GC-MS (gas chromatography/mass spectrometry) or optical analysis.

The polyester film used in the present invention may also be provided, on its surface opposed to the surface on which the above coating layer is formed, with a further coating layer. For example, when it is intended to provide a functional layer such as a micro lens layer, a prism layer, an anti-sticking layer, a light diffusion layer, a hard coat layer, an adhesive layer and a printing layer on a surface of the polyester film which is opposed to the surface on which the above surface functional layer such as a hard coat layer is formed, the provision of such a further coating layer on the opposite surface of the polyester film is capable of enhancing adhesion to these functional layers. As the components of the further coating layer formed on the opposite surface of the polyester film, there may be used conventionally known materials. Examples of the materials for the further coating layer include binder polymers such as polyester resins, acrylic resins and urethane resins, crosslinking agents such as oxazoline compounds, epoxy compounds, melamine compounds and isocyanate compounds. These materials may be respectively used alone or in combination of any two or more thereof. In addition, the further coating layer may be a coating layer which comprises the above metal oxide, oxazoline compound and epoxy compound (i.e., the same coating layer may be formed on opposite surfaces of the polyester film).

The analysis of the respective components included in the coating layer may be conducted, for example, by analysis methods such as TOF-SIMS, ESCA and fluorescent X-ray analysis.

When forming the coating layer by an in-line coating method, the laminated polyester film is preferably produced by the method in which an aqueous solution or a water dispersion comprising a series of the above-mentioned compounds is prepared as a coating solution having a concentration of about 0.1 to about 50% by weight in terms of a solid content thereof, and the thus prepared coating solution is applied onto the polyester film. The coating solution may also comprise a small amount of an organic solvent for the purpose of improving a dispersibility in water, and a film-forming property, unless the subject matter of the present invention is adversely affected thereby. The organic solvent may be used alone, or two or more organic solvents may be appropriately used in the form of a mixture thereof.

In the laminated polyester film according to the present invention, the thickness of the coating layer formed on the polyester film is in the range of 0.04 to 0.20 µm and preferably 0.07 to 0.15 µm. When the thickness of the coating layer is out of the above-specified range, the resulting film tends to be deteriorated in visibility owing to occurrence of interference fringes which tends to be caused after forming a surface functional layer on the coating layer.

In the present invention, as the method of forming the coating layer, there may be used conventionally known coating methods such as a reverse gravure coating method, a direct gravure coating method, a roll coating method, a die coating method, a bar coating method and a curtain coating method.

In the present invention, the drying and curing conditions used upon forming the coating layer on the polyester film are not particularly limited. For example, in the case where the coating layer is formed by an off-line coating method, the coating layer may be subjected to heat treatment usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat treatment usually at a temperature of 70 to 280°C for 3 to 200 sec.

In any of the off-line coating and in-line coating methods, the heat treatment may be used in combination with irradiation with active energy rays such as irradiation with ultraviolet rays, if required. The polyester film constituting the laminated polyester film of the present invention may also be previously subjected to surface treatments such as corona treatment and plasma treatment.

The coating layer used in the present invention is suitably controlled in its refractive index in order to suppress occurrence of interference fringes, more specifically, is designed such that the refractive index of the coating layer is near a geometrical mean value of refractive indices of the polyester film as a base material and the surface functional layer such as a hard coat layer. The refractive index of the coating layer has a close relationship with a reflectance of the coating layer. In the present invention, the absolute reflectance of the coating layer is adjusted such that when preparing a graph by plotting a wavelength on an abscissa axis thereof and a reflectance on an ordinate axis thereof, it is necessary that one minimum value of the reflectance is observed on a characteristic curve thereof in the wavelength range of 400 to 800 nm, and the absolute reflectance at the minimum values of the coating layer is not less than 4.0%. Within the range of the absolute reflectance as defined in the present invention, if the minimum value is observed in the same wavelength range, the reflectance at the minimum value becomes a high value when the refractive index thereof is high, and becomes a low value when the refractive index thereof is low.

In the present invention, the absolute reflectance of the coating layer is designed such that one minimum value thereof is present in the wavelength range of 400 to 800 nm, and more preferably the one minimum value is present in the wavelength range of 500 to 700 nm. The reflectance value at the minimum value preferably lies within the range of 4.0 to 6.5% and more preferably 4.5 to 6.2%. When one or more minimum values are present in the wavelength range of 400 to 800 nm or when the absolute reflectance at the minimum value is out of the above-specified range, interference fringes tend to be caused after forming the surface functional layer such as a hard coat layer on the coating layer, so that the resulting film tends to be deteriorated in visibility.

In the present invention, the resulting laminated polyester film preferably has a high transparency in order to use the film in the applications requiring a transparency such as displays. For example, a haze may be used as an index of the transparency. The haze value of the polyester film is preferably in the range of not more than 1.5%, more preferably not more than 1.2%, and still more preferably not more than 1.0%. When the haze value is excessively high, the resulting film tends to be deteriorated in visibility.

In general, in the polyester film according to the present invention, the surface functional layer such as a hard coat layer may be provided on the coating layer. The material used in the hard coat layer is not particularly limited. Examples of the material for the hard coat layer include cured products of monofunctional (meth)acrylates, polyfunctional (meth)acrylates and reactive silicon compounds such as tetraethoxysilane. Among these materials, from the viewpoint of satisfying both a high productivity and a good hardness, especially preferred are cured products obtained by polymerizing compositions comprising ultraviolet-curable polyfunctional (meth)acrylates.

The compositions comprising the above ultraviolet-curable polyfunctional (meth)acrylates are not particularly limited. For example, there may be used a composition prepared by mixing one or more kinds of conventionally known ultraviolet-curable polyfunctional (meth)acrylates, a composition commercially available as an ultraviolet-curable hard coat material, or a composition prepared by further adding the other component to the above compositions in such a range that the effects of the present invention are not adversely influenced thereby.

The ultraviolet-curable polyfunctional (meth)acrylates are not particularly limited. Examples of the ultraviolet-curable polyfunctional (meth)acrylates include (meth)acrylic derivatives of polyfunctional alcohols such as dipentaerythritol hexa(meth)acrylate, tetramethylol methane tetra(meth)acrylate, tetramethylol methane tri(meth)acrylate, trimethylol propane tri(meth)acrylate, 1,6-hexanediol di(meth)acrylate and 1,6-bis(3-acryloyloxy-2-hydroxypropyloxy)hexane; polyethylene glycol di(meth)acrylate; and polyurethane (meth)acrylate.

The other components which may be contained in the compositions comprising the ultraviolet-curable polyfunctional (meth)acrylates are not particularly limited. Examples of the other components include inorganic or organic fine particles, polymerization initiators, polymerization inhibitors, antioxidants, antistatic agents, dispersants, surfactants, light stabilizers and leveling agents. In addition, when drying the film formed by a wet coating method, an optional amount of a solvent may be added thereto, if required.

As the method of forming the hard coat layer using an organic material, there may be adopted general wet coating methods such as a roll coating method and a die coating method. The thus formed hard coat layer may be subjected to curing reaction, if required, by heating or by irradiating an active energy ray such as an ultraviolet ray and electron beam thereto.

### Examples

The present invention is described in more detail below by Examples. However, these Examples are only illustrative and not intended to limit the present invention thereto. In addition, the measuring and evaluating methods used in the present invention are as follows.

### (1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Method of measuring average particle diameter:

Using TEM ("H-7650" manufactured by Hitachi Ltd.; accelerated voltage: 100 V), the coating layer was observed to measure particle diameters of 10 particles therein and calculate an average particle diameter thereof from the measured values.

### (3) Method of measuring thickness of coating layer:

The surface of the coating layer was dyed with RuO₄ and embedded in an epoxy resin. Thereafter, the resin-embedded coating layer was cut into a piece by an ultrathin sectioning method, and dyed with RuO₄ to observe and measure a cut section of the coating layer using TEM ("H-7650" manufactured by Hitachi Ltd.; accelerated voltage: 100 V).

### (4) Method of evaluating absolute reflectance from surface of coating layer formed on polyester film:

A black tape ("Vinyl Tape VT-50" produced by Nichiban Co., Ltd.) was previously attached to a back surface of a polyester film which was opposite to its surface to be measured, and the surface of a coating layer formed on the polyester film was subjected to measurement for an absolute reflectance thereof in a wavelength range of 300 to 800 nm using a spectrophotometer (an ultraviolet/visible spectrophotometer "V-570" and an automatic absolute reflectance analyzer "AM-500N" both manufactured by JASCO Corp.) under the conditions including a synchronous mode; an incident angle of 5°; N-polarization; response: Fast; data sampling interval: 1.0 nm; band width: 10 nm; scanning speed: 1000 m/min, to thereby evaluate a wavelength at a minimum value of a reflectance (bottom wavelength) as well as the reflectance.

### (5) Method of measuring haze:

The haze was measured using a haze meter "HM-150" manufactured by Murakami Color Research Laboratory Co., Ltd., according to JIS K 7136.

### (6) Method of evaluating interference fringes:

A coating solution prepared by mixing 72 parts by weight of dipentaerythritol hexaacrylate, 18 parts by weight of 2-hydroxy-3-phenoxypropyl acrylate, 10 parts by weight of antimony pentaoxide, 1 part by weight of a photopolymerization initiator ("IRGACURE 184" (tradename) produced by Ciba Speciality Chemicals Corp.) and 200 parts by weight of methyl ethyl ketone was applied on the coating layer formed on the polyester film such that a coating thickness thereof after drying was 5 µm, and cured by irradiating an ultraviolet ray thereto to thereby form a hard coat layer. The resulting film was visually observed under irradiation with a three bands fluorescent lamp to determine whether or not any interference fringes were recognized. The observation results were evaluated according to the following ratings:
A: No interference fringes were recognized.
B: Thin and scattered interference fringes were recognized.
C: Thin but linear interference fringes were recognized.
D: Clear interference fringes were recognized.

### (7) Method of evaluating adhesion property:

In order to evaluate an adhesion property of the coating layer more strictly, studies have been conducted using a material obtained by excluding antimony pentaoxide from the hard coat solution used in the above (5). More specifically, a coating solution prepared by mixing 80 parts by weight of dipentaerythritol hexaacrylate, 20 parts by weight of 2-hydroxy-3-phenoxypropyl acrylate, 5 part by weight of a photopolymerization initiator ("IRGACURE 184" (tradename) produced by Ciba Speciality Chemicals Corp.) and 200 parts by weight of methyl ethyl ketone was applied on the coating layer formed on the polyester film such that a coating thickness thereof after drying was 5 µm, and cured by irradiating an ultraviolet ray thereto to thereby form a hard coat layer. The thus obtained film was allowed to stand under environmental conditions of 80°C and 90% RH for 100 hr. Thereafter, the resulting hard coat layer was subjected to cross-cutting to form 100 (10 x 10) cross-cuts thereon. An 18 mm-wide tape ("Cellotape (registered trademark) CT-18" produced by Nichiban Co., Ltd.) was attached onto the thus cross-cut hard coat layer, and then rapidly peeled off therefrom at a peel angle of 180°. Then, the surface of the hard coat layer from which the tape was peeled off was observed to measure an area of the hard coat layer peeled off together with the tape. The evaluation ratings are as follows.
A: Peeled area of the hard coat layer was less than 3%.
B: Peeled area of the hard coat layer was not less than 3% but less than 10%.
C: Peeled area of the hard coat layer was not less than 10% but less than 50%.
D: Peeled area of the hard coat layer was not less than 50%.

The polyesters used in the respective Examples and Comparative Examples were prepared by the following methods.

### <Method for producing polyester (A)>

One hundred parts by weight of dimethyl terephthalate and 60 parts by weight of ethylene glycol as starting materials were charged together with 0.09 part by weight of magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. Into the obtained reaction mixture were added 0.04 part by weight of ethyl acid phosphate and then 0.04 part by weight of antimony trioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged from the reaction vessel under application of a nitrogen pressure thereto, thereby obtaining a polyester (A) having an intrinsic viscosity of 0.63.

### <Method for producing polyester (B)>

The same procedure as defined in the above method for producing the polyester (A) was conducted except that after adding 0.04 part by weight of ethyl acid phosphate, 0.2 part by weight of silica particles having an average particle diameter of 1.6 µm in the form of a dispersion in ethylene glycol and 0.04 part by weight of antimony trioxide were added, and the polycondensation reaction was terminated at the time at which a viscosity of the reaction solution reached the value corresponding to an intrinsic viscosity of 0.65, thereby obtaining a polyester (B) having an intrinsic viscosity of 0.65.

The examples of the compounds constituting the coating layer are as follows.

### (Examples of compounds)

### Metal oxide: (IA)

Zirconium oxide particles having an average particle diameter of 15 nm

### Metal oxide: (IB)

Titanium oxide particles having an average particle diameter of 15 nm

### Oxazoline compound: (IIA)

Oxazoline group and polyalkyleneoxide chain-containing acrylic polymer "EPOCROSS WS-500" (produced by Nippon Shokubai Co., Ltd.; polymer of a type comprising 1-methoxy-2-propanol as a solvent in an amount of about 38% by weight)

### •Oxazoline compound: (IIB)

Oxazoline group and polyalkyleneoxide chain-containing acrylic polymer "EPOCROSS WS-700" (produced by Nippon Shokubai Co., Ltd.; polymer of a VOC-free type)

### •Epoxy compound: (IIIA)

Polyglycerol polyglycidyl ether "DECONAL EX-521" (produced by Nagase Chemtex Co., Ltd.)

### •Epoxy compound: (IIIB)

Epoxy resin "DECONAL EX-1410" (produced by Nagase Chemtex Co., Ltd.)

### •Polyester resin having a condensed polycyclic aromatic structure: (IVA)

Water dispersion of polyester resin obtained by copolymerizing the following composition:
Monomer composition: (acid component) 2,6-naphthalenedicarboxylic acid/5-sodium sulfoisophthalic acid//(diol component) ethylene glycol/diethylene glycol = 92/8//80/20 (mol%)

### •Polyester resin: (IVB)

Water dispersion of polyester resin obtained by copolymerizing the following composition:
Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### •Acrylic resin: (IVC)

Water dispersion of acrylic resin obtained by polymerizing the following composition:
Emulsion polymer (emulsifying agent: anionic surfactant) of ethyl acrylate/n-butyl acrylate/methyl methacrylate/N-methylol acrylamide/acrylic acid = 65/21/10/2/2 (wt%)

### •Urethane resin: (IVD)

Carboxylic acid water-dispersed type polyester polyurethane resin "HYDRAN AP-40" (produced by DIC Corp.)

### •Hexamethoxymethyl melamine: (V)

### •Particles: (VIA)

Silica particles having an average particle diameter of 0.07 µm

### •Particles: (VIB)

Silica particles having an average particle diameter of 0.12 µm

### Example 1:

A mixed raw material obtained by mixing the polyesters (A) and (B) in amounts of 90% by weight and 10% by weight, respectively, as a raw material for outermost layers (surface layers), and the polyester (A) as a raw material for an intermediate layer, were respectively charged into two extruders, melted therein at 285°C, and then co-extruded therefrom on a cooling roll whose surface was controlled to a temperature of 40°C to form a sheet having a two-kind/three-layer structure (discharge amount ratio: surface layer/intermediate layer/surface layer = 1:18:1), followed by cooling and solidifying the thus co-extruded sheet on the cooling roll, thereby obtaining an unstretched sheet. Next, the thus obtained unstretched sheet was stretched utilizing a difference between peripheral speeds of rolls at a temperature of 85°C and a stretch ratio of 3.4 times in a longitudinal direction thereof. Thereafter, a coating solution 1 shown in the below-mentioned Table 1 was applied on both surfaces of the thus obtained longitudinally stretched sheet. Then, the resulting coated sheet was introduced into a tenter where the sheet was stretched at a temperature of 120°C and a stretch ratio of 4.0 times in a lateral direction thereof and then heat-treated at 225°C. Next, the obtained stretched sheet was relaxed by 2% in a lateral direction thereof, thereby obtaining a polyester film having a thickness of 125 µm which was provided on both surfaces thereof with the coating layer having a thickness (after dried) of 0.10 µm.

As a result of measuring an absolute reflectance of the thus obtained polyester film, it was confirmed that the minimum value of the absolute reflectance was observed at 600 nm, and the reflectance at the minimum value was 4.2%. In addition, it was confirmed that no clear interference fringes were observed even after laminating the hard coat layer on the film, and adhesion between the respective layers in the film was good. Further, it was also confirmed that the polyester film exhibited a low haze and a good transparency. The properties of the obtained polyester film are shown in Table 2.

### Examples 2 to 21:

The same procedure as defined in Example 1 was conducted except that the coating agent composition was changed to those shown in Table 1, thereby obtaining polyester films. As shown in Table 2, the thus obtained polyester films exhibited a high reflectance and a good level concerning occurrence of interference fringes and had a good adhesion property.

### Comparative Examples 1 to 5:

The same procedure as defined in Example 1 was conducted except that the coating agent composition was changed to those shown in Table 1, thereby obtaining polyester films. The evaluation results of the thus obtained laminated polyester films are as shown in Table 2, namely, it was confirmed that clear interference fringes were observed on the respective films, or the films had a poor adhesion property.

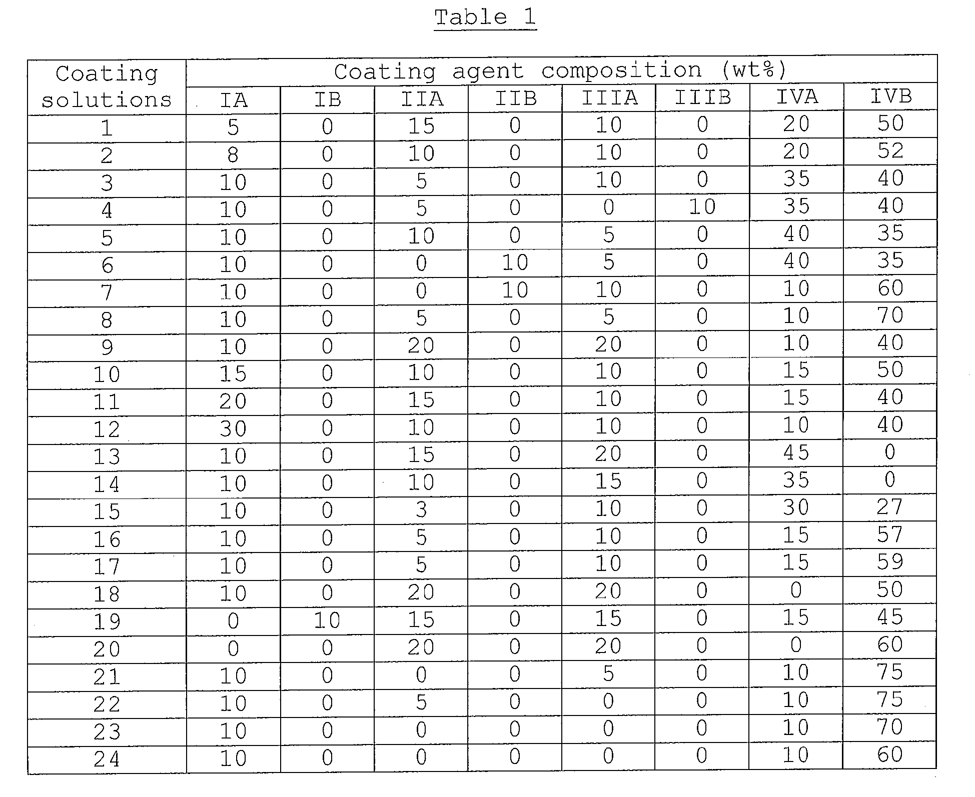

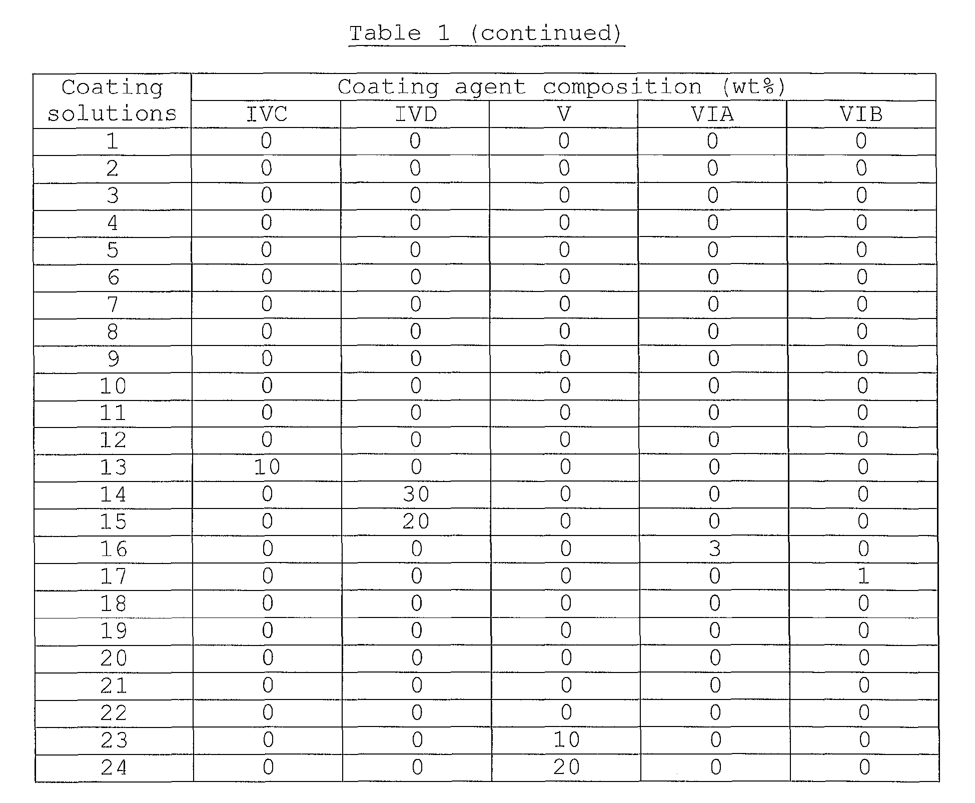

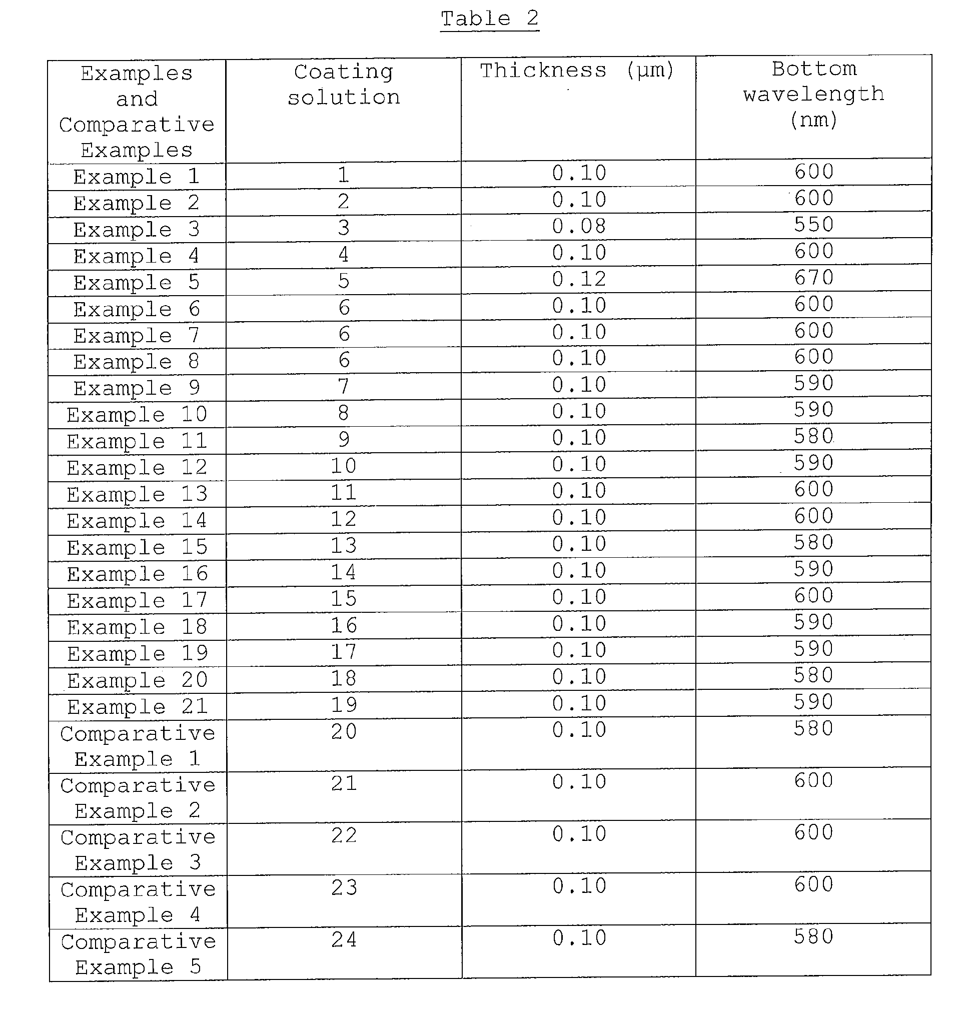

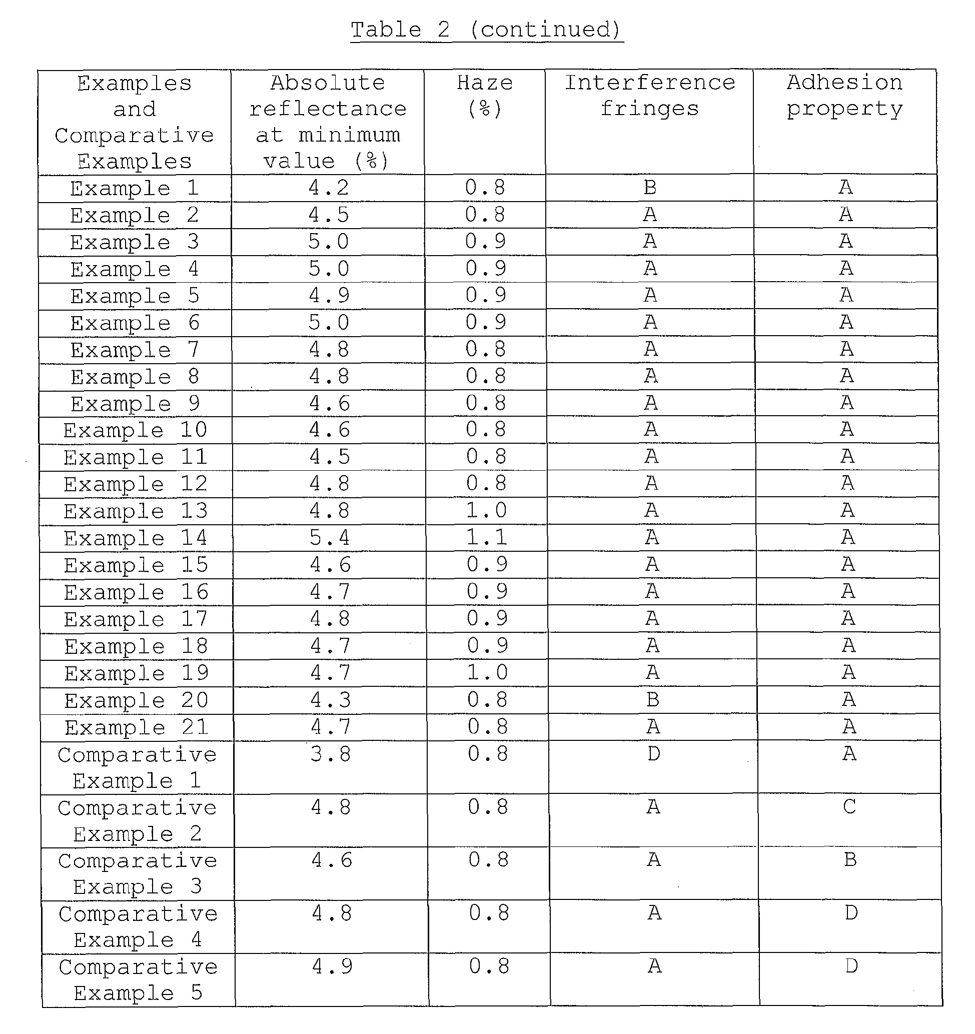

### INDUSTRIAL APPLICABILITY

The film of the present invention can be suitably used, for example, in the applications of various optical films as members of liquid crystal displays or plasma displays as well as molding films in which a good adhesion property to a surface functional layer such as a hard coat layer and a good visibility are required.

## Claims

1. A laminated polyester film comprising a polyester film and a coating layer, which coating layer is formed on at least one surface of the polyester film, is produced by applying a coating solution comprising a metal oxide, an oxazoline compound and an epoxy compound thereonto, and has an absolute reflectance whose one minimum value is present in a wavelength range of 400 to 800 nm, the absolute reflectance at the minimum value being not less than 4.0%, wherein the coating layer has a thickness of 0.04 to 0.20 µm, wherein a content of the metal oxide in the coating solution is 3 to 70% by weight; a content of the oxazoline compound in the coating solution is 1 to 50% by weight; and a content of the epoxy compound in the coating solution is 1 to 50% by weight.

2. A laminated polyester film according to claim 1, wherein the metal oxide has an average particle diameter of not more than 100 nm.

3. A laminated polyester film according to claim 1 or 2, wherein the metal oxide is zirconium oxide or titanium oxide.

## Patentansprüche

1. Laminierte Polyesterfolie, umfassend eine Polyesterfolie und eine Überzugsschicht, welche Überzugsschicht auf mindestens einer Oberfläche der Polyesterfolie gebildet ist, hergestellt ist durch Aufbringen einer Beschichtungslösung darauf, umfassend ein Metalloxid, eine Oxazolinverbindung und eine Epoxyverbindung, und ein absolutes Reflexionsvermögen, dessen einer Minimalwert in einem Wellenlängenbereich von 400 bis 800 nm vorliegt, besitzt, wobei das absolute Reflexionsvermögen bei dem Minimalwert nicht weniger als 4,0 % beträgt, wobei die Überzugsschicht eine Dicke von 0,04 bis 0,20 µm aufweist, wobei ein Gehalt des Metalloxids in der Überzugslösung 3 bis 70 Gew.-% beträgt; ein Gehalt der Oxazolinverbindung in der Beschichtungslösung 1 bis 50 Gew.-% beträgt; und ein Gehalt der Epoxyverbindung in der Beschichtungslösung 1 bis 50 Gew.-% beträgt.

2. Laminierte Polyesterfolie nach Anspruch 1, wobei das Metalloxid einen durchschnittlichen Teilchendurchmesser von nicht mehr als 100 nm besitzt.

3. Laminierte Polyesterfolie nach Anspruch 1 oder 2, wobei das Metalloxid Zirkoniumoxid oder Titanoxid ist.

## Revendications

1. Un film de polyester stratifié comprenant un film de polyester et une couche de revêtement, laquelle couche de revêtement est formée sur au moins une surface du film de polyester, est réalisée en appliquant une solution de revêtement comprenant un oxyde métallique, un composé oxazoline et un composé époxy là-dessus, et a une réflectance absolue dont l'une valeur minimale est présente dans une plage de longueur d'onde de 400 à 800 nm, la réflectance absolue à la valeur minimale n'étant pas inférieure à 4,0%, dans la couche de revêtement a une épaisseur de 0,04 à 0,20 µm, dans lequel une teneur en oxyde métallique dans la solution de revêtement est de 3 à 70% en poids; une teneur en composé oxazoline dans la solution de revêtement est de 1 à 50% en poids; et une teneur en composé époxy dans la solution de revêtement est de 1 à 50% en poids.

2. Le film de polyester stratifié selon la revendication 1, dans lequel l'oxyde métallique a un diamètre de particule moyen ne dépassant pas 100 nm.

3. Le film de polyester stratifié selon la revendication 1 ou 2, dans lequel l'oxyde métallique est l'oxyde de zirconium ou de l'oxyde de titane.
